(19) Europäisches Patentamt

European Patent Office

Office européen des brevets

(11) Publication number: **0 520 116 A1**

# EUROPEAN PATENT APPLICATION

(21) Application number: **91480095.8**

(22) Date of filing: **28.06.91**

(51) Int. Cl.⁵: **G06F 15/40**, G06F 15/16

(43) Date of publication of application:
**30.12.92 Bulletin 92/53**

(84) Designated Contracting States:
**DE FR GB IT**

(71) Applicant: **International Business Machines Corporation**
**Old Orchard Road**
**Armonk, N.Y. 10504(US)**

(72) Inventor: **Basso, Claude**
**252, avenue de la Lanterne**
**F-06200 Nice(FR)**
Inventor: **Calvignac, Jean**
**187, Chemin les Vallières**
**F-06610 la Gaude(FR)**

(74) Representative: **Lattard, Nicole**
**Compagnie IBM France Département de Propriété Intellectuelle**
**F-06610 La Gaude(FR)**

(54) Method and apparatus for performing pattern search functions.

(57) A method and apparatus for searching a pattern such as an address pattern of 48 bits among a list of addresses of 48 bits which can be dynamically updated.

A search table (52) comprising control blocks is used for conducting the search of a specified pattern by processing logic circuits (24,26).

The control blocks can be of a first type indicative of test operations on at least one selected bit of the to-be-searched pattern and of of a second type indicative of compare operations with a specified value and of a third type indicative that no operations have to be performed. These control blocks are chained in at least one chain in such a way that each control block chain determine operations which lead to the finding of one of the p patterns.

To perform the search, a processing logic circuit (24 or 26) reads a first control block at a search table address which is derived from a selected field of k = 12 bits of the pattern to be searched. It generates a not-found pattern signal if the read control block is of the third type, or executes the the operations indicated in the first read control block and the control blocks chained thereto, until a control block of the second type is is reached and compares the to be searched pattern with the specified value in the control block of the second type. If a mismatch is detected, it generates a "not found pattern" information and if a match is detected it generates a a "found pattern" information.

FIG. 2

## Description of the Invention

The present invention relates to a method and an apparatus for performing the pattern search functions which are key functions implemented in bridges or routers between communication networks.

## Background Art

Interconnecting local area networks through bridges is a common practice, as described in the third edition of "Data and Computer Communications" by William Stalling at pages 514 to 521.

In such an environment, messages are sent from source stations connected to one local area network to destination stations connected to the same local area network or to another local area network. These messages are transported in frames including source address and destination address fields. One function of the bridge linking the local area networks consists in routing the frames as determined by their destination addresses.

To perform this function, the bridge comprises a search table to identify the network to which the frames must be routed.

Different address schemes exist, the present trend is toward a universal addressing scheme of the stations, which means that each station is given a unique universal address. It results therefrom that the station addresses comprise up to 48 bits, so that $2^{48}$ address stations are available.

A communication network comprising a plurality of local area networks linked by bridges may comprise up to 8000 stations with 8000 address patterns among the $2^{48}$ possible address patterns.

The pattern search function within the bridges could be easily implemented using contents addressable memories CAM. However due to the high number of possible address patterns such an implementation is impracticable because the largest CAM which presently exists has a 256x48 density. Thus, the implementation of the pattern search function would need 32 CAM's to support 8000 addresses.

In addition, stations can be connected and disconnected from the network and when connected can be active or not, so that the search table has to be updated by inserting new addresses or deleting the addresses which are no more used.

The bridge circuitry must have the capability to recognize the source addresses within the frame in order to update the search table and the destination addresses in order to route the frames.

Consequently, the implementation of hashing techniques which consists in calculating a coarse address by converting the pattern to be searched into a signature used to address a group of addresses within the table is difficult, because the addresses are variable.

One conventional way to solve this problem consists in implementing a binary tree search algorithm such as described in US patent 3,916,387 and in the article IEEE Proceedings Vo. 135 Pt. E, N° 1 January 1988.

The binary tree search algorithm of US patent 3,916,387 is implemented to locate objects in an electrical directory entity and in that respect has not to be optimized to have a search made within the short period (about one microsecond) which is permitted to perform the search function in a bridge of communication networks. In addition, this algorithm which is based on the test of selected bits of the searched pattern as defined by indices determined by comparing adjacent sorted keys which are the sinks or leafs of the binary tree, implies that keys can be sorted and that a search for an object necessarily leads to a sink by following the path as determined by the indices. This is not true when a search is made in an address directory for a bridge of communication networks, because it may happen that the searched address is not comprised in the address directory.

The search algorithm described in the IEEE article, does not present this drawback, because each bit of the searched address is tested either sequentially or by groups of bits such as 4-bit symbols. Implementations of the search algorithm are described in this article which lead to an optimization of the size of the search table.

## Summary of the Invention

An object of the invention is a method and an apparatus for implementing a search algorithm which allows to find out a bit pattern among a large number of reference patterns in a very short time.

Another object of the invention is such a method and apparatus which allow the insert and delete functions of patterns in the search table used for the search function, to be performed in a simple way.

Another object of the invention is such a method and apparatus which are suitable for performing the pattern search functions within a bridge between communication networks.

Another object of the invention is such a method and apparatus which can be implemented in TCP/IP routers wherein the addresses are 32-bit long and are subdivided in three variable length fields, where TCP/IP means Transmission Control Protocol/Internet Protocol.

Another object of the invention is such a method and apparatus wherein, the search time is only dependent upon the length of the pattern but not on the number of the search table entries.

The method according to the subject invention can be used for searching a n-bit pattern among a plurality of p n-bit patterns, where n and p are integer numbers and p is lower than $2^n$ and the p patterns are any patterns among the $2^n$ possible patterns of n bits. It comprises using a search table stored in a storing means and comprising control blocks which are chained together and the contents of which is indicative of operations to be performed on the to-be-searched pattern. It is characterized in that it includes the steps of:

a) providing control blocks of a first type indicative of test operations on at least one selected bit of the to-be-searched pattern and of a second type indicative of compare operations with a specified value and of a third type indicative that no operations have to be performed,

b) chaining control blocks in at least one chain in such a way that each control block chain determines operations which lead to the finding of one out of the p patterns, depending upon the values of the p patterns,

c) reading a first control block at a search table address which is derived from a selected field of k bits of the to-be- searched pattern, with k being an integer number lower than n,

d) returning a not-found pattern signal if the read control block is of the third type or executing the operations indicated in the control block and the control blocks chained thereto, until a control block of the second type is is reached,

e) upon reaching a control block of the second type, comparing the to-be-searched pattern with the specified value in said control block,

f) returning a "found pattern" information if a match is detected at step e) or a " not found pattern" information if a mismatch is detected at step e) indicative of the fact that the to-be-searched pattern is one pattern among the p patterns or not, respectively.

The step of providing control blocks is performed by :

- writing in the control blocks located in the search table at addresses derived from the values of the selected field of k-bits of the p patterns, information indicative of at least one operation which starts the search in binary trees comprised of the (n-k) remaining bits of the patterns among the p patterns having the same combinations of k bits in the selected k-bit field,
  - chaining to each control block at an address derived from the the selected field of k bits, a number of chains of control blocks equal to the number of leafs of the corresponding binary tree and writing in the control blocks of each of said chains information indicative of the operations which lead to a leaf, said operations comprising test operations of the first type on bits at positions where jumps exist in the binary tree, if any, and at least one compare operation of the second type wherein the specified value is the value of the (n-k) bits of one of the p patterns of the said binary tree,
- providing an operation of the third type in the control blocks at addresses derived from combinations of the k bits of the selected field which do not exist in the p patterns.

A searching apparatus for implementing the subject method comprises:

writing means for writing the control blocks in the search table, said control blocks being of a first type indicative of test operations on at least one selected bit of the to- be- searched pattern and of of a second type indicative of compare operations with a specified value and of a third type indicative that no operations have to be performed, and chaining control blocks in at least one chain in such a way that each control block chain determine operations which lead to the finding of one of the p patterns, depending upon the values of the p patterns,

means for reading a first control block at a search table address which is derived from a selected field of k of the to-be-searched pattern, with k being an integer number lower than n,

means for generating a not-found pattern signal if the read control block is of the third type,

means for executing the operations indicated in the first read control block and the control blocks chained thereto, until a control block of the second type is is reached,

comparing means for comparing the to be searched pattern with the specified value in the control block of the second type,

means for generating a "not found pattern" information if a mismatch is detected by the comparing means,

means for generating a "found pattern" information if a match is detected by the comparing means, whereby the "found pattern" information indicates that the to-be-searched pattern is one pattern among the p patterns.

In addition it comprises:

means responsive to the detection of a match by the comparing means for reading a final control block (LEAF) chained to the control block of the second type and comprising information related to the found pattern.

The method and apparatus according to the subject invention can be used in a connecting device, such as a bridge or router between communication networks linking stations, wherein each station has an address of n bits, so that the set of addresses of the active stations pertaining to the communication networks connectable by the connecting device through input and output ports comprise p patterns of n bits, said bridge being responsive to the frames received on an input port from a source station comprising a source station address field and a destination address field for determining the output port to which the frame has to be routed.

The bridge or router includes two searching apparatuses.

A first one is responsive to the destination address for searching, the destination address pattern, and if the destination address pattern is found, reading the final control block wherein the related pattern information is the frame routing information.

A second one is responsive to the source address for searching the source address pattern and if the source address pattern is not found, updating the control blocks in the search table and writing new control blocks so that the control blocks needed to find said address pattern be inserted in the search table.

Brief Description of the Figures

Figure 1 schematically represents a bridge between two communication networks wherein the searching apparatus and method according to the present invention can be implemented.

Figure 2 represents the pattern search mechanism implementing the method according to the present invention, in more details.

Figure 3 represents a list of addresses for the purpose of illustrating the concept of the present invention and the control block format.

Figure 4 represents the contents of the control blocks assuming that a search for a pattern out of the patterns shown in Figure 3 is made.

Figure 5 represents the method implemented in the searching logic circuit 24 or 26 of Figure 2, for searching for a pattern.

Figures 6-A to 6-E represents the method implemented in the updating mechanism of Figure 2 for updating the control blocks for inserting a new pattern.

Figure 7 represents another method which can be implemented in the search logic circuit 26 for updating the control blocks for inserting a new pattern.

Figures 8-A, 8-B and 8-C represent the method implemented in the updating mechanism for updating the control blocks for deleting a pattern.

Figure 9 represents the control blocks contents which are used when the method and apparatus of the present invention are implemented in a TCP-IP router.

Detailed Description of the Invention

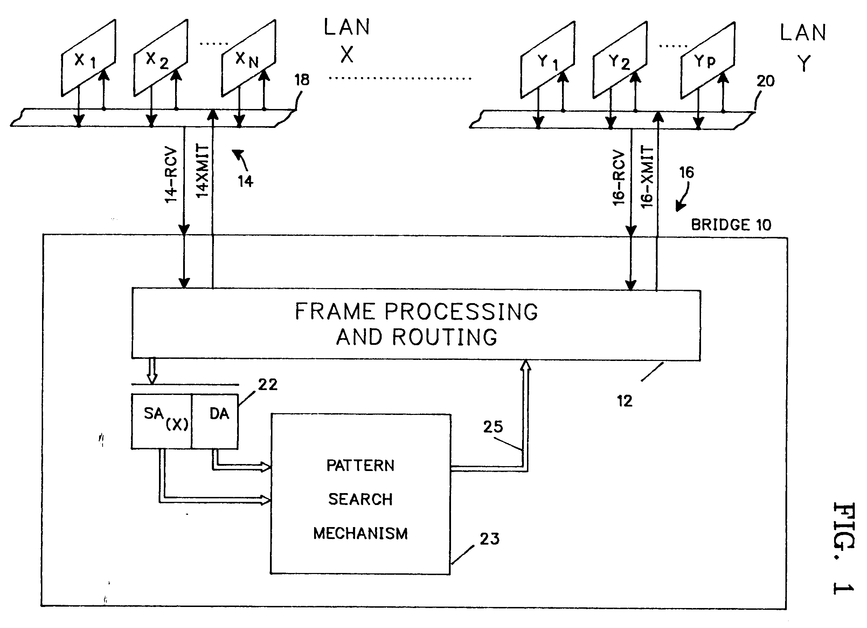

Figure 1 schematically represents the block diagram of a bridge 10 into which the search mechanism according to the present invention can be implemented. It comprises a frame processing and routing device 12 which receives and transmits the frames from/to local area networks through links such as 14 and 16. Two local area networks 18 and 20 are shown in Figure 1. Local area network LAN X 18 comprises stations X1 to Xn and local area network LAN Y 20 comprises stations Y1 to Yp.

The frame processing and routing device 12 receives the frames circulating on LAN X 18 and on LAN Y 20 through receive links 14-RCV and 16-RCV respectively. It extracts the source address and destination address fields therefrom and provides these fields into register 22. The source address and destination fields are provided to the pattern search mechanism 23 which processes the destination address for the purpose of routing the received frames to LAN X 18 or LAN Y 20 through transmit links 14-XMIT or 16-XMIT respectively.

It processes the search address for the purpose of updating its search table, as will be described later on. The pattern search mechanism provides output control information on output bus 25 to the frame processing and routing device as a result of the search process on the destination address.

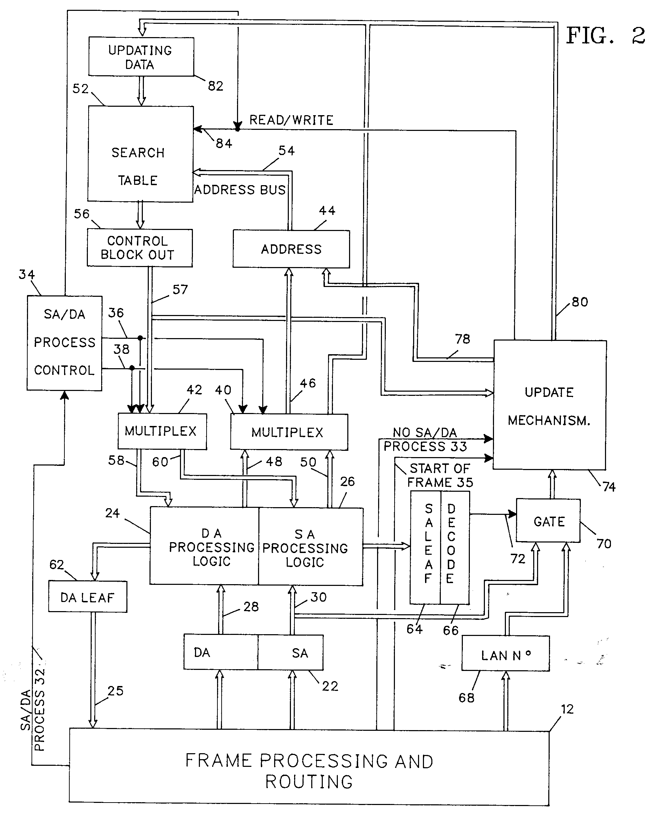

The block diagram of the search mechanism according to the present invention is shown in Figure 2.

When a frame is processed, the SA/DA address fields stored in register 22 are provided to a DA processing logic and a SA processing logic 24 and 26 respectively, through busses 28 and 30.

Frame processing and routing device 12 activates SA/DA processing line 32 and in response thereto SA/DA control circuit 34 generates control signals on lines 36 and 38 in order to interleave the process of searching the source address and destination address by SA processing logic and DA processing logic 26 and 24.

The control signals on the lines 36 and 38 are provided to multiplex circuits 40 and 42. The control signals on lines 36 and 38 are non overlapping pulses. In response to the control signals on lines 36 and 38 multiplex circuit 40 gates a search table address into register 44 through bus 46 provided either by the DA processing logic or SA processing logic on bus 48 or 50 respectively.

A search table 52 stores the control blocks which are read to perform the search as will be described later on.

Each time the search table is read during a search process for finding the SA/DA addresses, a control block is stored into control block out register 56 and provided to the DA processing logic 24 or DA processing logic 26 through multiplex circuit 42 and busses 58 and 60 under control of the gating signals on lines 36 and 38.

The DA searching process by the DA processing logic 24 results in the generation of a DA leaf which is the control block contents read at the end of the search process, if the destination address is found. If not, a broadcast command of the frame to each bridge port except the originating port is generated. Thus, the DA leaf contains the routing information. It is stored into register 62 and provided to the frame processing and routing device 12 through bus 26.

In the same way, the SA search process by the SA processing logic 26 results in the generation of a SA leaf which is stored into register 64. A decoder circuit 66 is responsive to the SA leaf register contents at the end of the search process to activate its output line 72 when it detects that the SA leaf process has ended by an abort condition which means that the SA address has not been found and that the search table must be updated with the control block information required to find this source address.

The signal on line 72 is provided to a gating circuit 70 which causes the SA value in register 22 and the LAN identification in register 68 which comprises the LAN number to which the source station belongs to be provided to an updating mechanism 74.

The updating mechanism 74 buffers the updating information (SA; LAN N°) and is activated when there is no SA/DA process in progress by a signal generated by frame processing and routing device 12 on lines 33 and 35 to update the search table control blocks, as will be described in details later on.

To do this, the update mechanism initiates a search process when line 33 is activated, and performs the same operations as the SA/DA processing logic, which includes addressing the search table through address bus 78, processing the read control block received from register 56 through bus 57, preparing the updating information in register 82 through bus 80. The frame processing and routing device 12 provides a Start of Frame signal on line 35 which is activated at the beginning of each frame. So, before writing the updating information, the updating mechanism tests this signal and writes the updating information only if the signal is inactive. Otherwise, the updating information is saved and written when the no SA/DA process line is active. This allows the control block integrity to be insured during the SA/DA searching process.

The read/write control signal is provided to the search table on line 84 either from the SA/DA process control circuit 34 during the SA/DA search process or from the update mechanism 74 during the updating process.

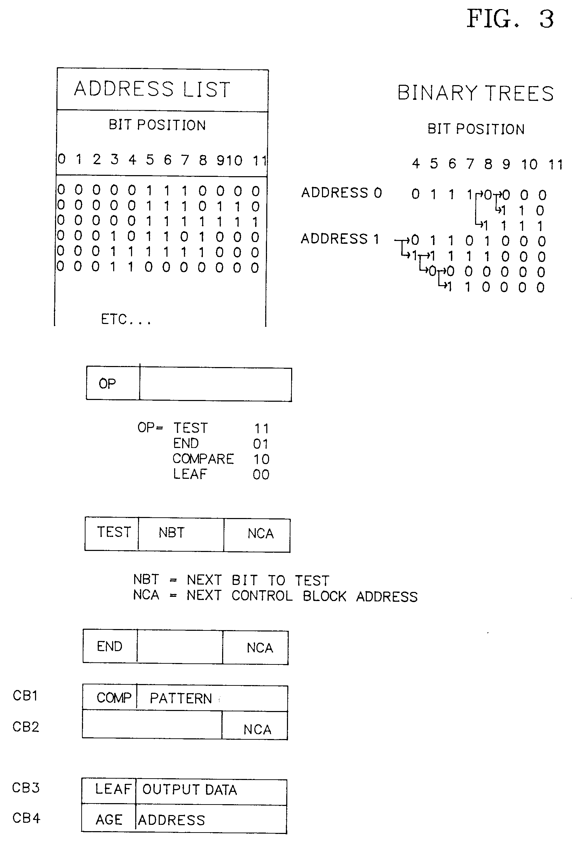

The figure 3 illustrates how the search table 52 is built according to the present invention. For the sake of explanation, the left part of Figure 3 represents the first items of a 12-bit address list.

In each set of addresses having the same four bits from 0000 to 1111 in the bit positions 0 to 3, the patterns in bit positions 4 to 11 can be represented as binary independent binary trees as shown in the right part of Figure 3.

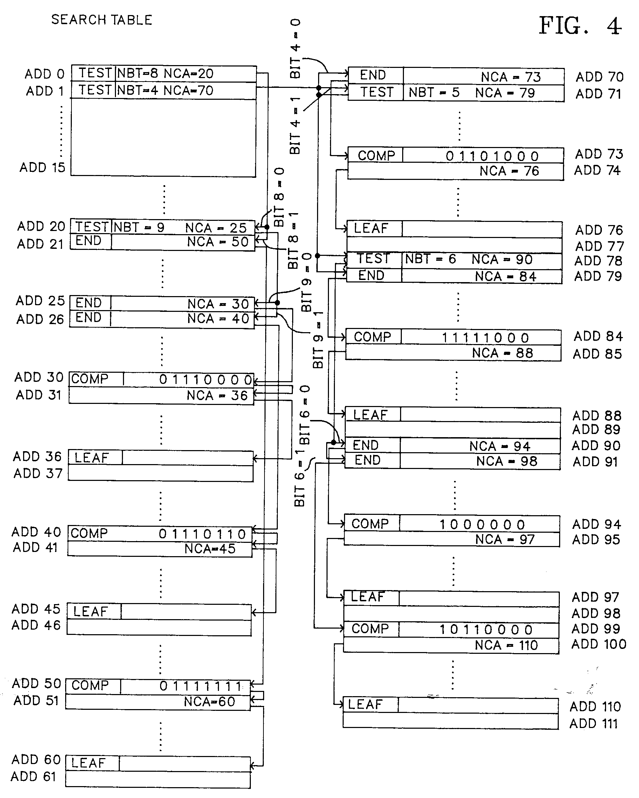

The search table comprises control blocks CB chained together which allows the search to be conducted. The contents of the control blocks corresponding to the seven addresses shown in Figure 3 are represented in Figure 4.

The control blocks stored at addresses 0000 to 1111 (0 to 15 in decimal representation) contain information to initiate the search for a pattern and to point on the next control block to find a path in the corresponding binary tree, the first control block read to search for a pattern is addressed by the four bits in the left positions 0 to 3 of the pattern.

A specific format for the control block is illustrated in Figure 3.

Each control block comprises a command field OP. This command field is set to a value which indicates which operation have to be performed on the search pattern.

It can be set to TEST, END, COMPARE or LEAF by encoding two bits of this field to 11, 01, 10 or 00 respectively.

The LEAF command field encoding is chosen equal to 00 because the control blocks at addresses 0000 to 1111 can never be leaf control blocks so that a 00 in the command field of these control blocks indicates that the control block is void (i.e not used).

When set to test, the field NBT (Next Bit to Test) is set to a value indicating which bit of the searched pattern have to be tested, and the field NCA (Next Control block Address) indicates the address of the next control block.

A control block having its command field set to END comprises an NCA field.

A control block shown as CB1, having its command field set to COMP (compare) comprises a PATTERN field, and the next control block CB2 comprises the NCA field which points to the next control block.

A control block shown as CB3, having its command field set to LEAF comprises any desirable information such as the LAN number which is used for routing purpose. The next control block CB4 comprises an AGE field which is set to the current time value each time the LEAF control block is read at the end of a search for a source address, and also comprises the corresponding station address. A background task running in the updating mechanism periodically scans the search table and when a too old age value is found in a leaf, it generates a DELETE command of the corresponding pattern found in the control block CB4 in order to have the control blocks which lead to this pattern deleted by the updating mechanism.

The size of the control block is not detailed in this description because it will be obvious for the man skilled in the art to arrange the various fields at his best convenience to minimize the search table capacity.

In a preferred embodiment of the invention, a search is conducted by testing specified bits of the to-be searched pattern as determined by the NBT value of the TEST control blocks in order to find an entry in the search table and performing a global comparison to verify that the found entry is equal to the searched pattern.

Thus, assuming that the four most significant bits of the searched pattern are 0000, the control block at address 0 of the search table is read by the searching mechanism, either 24, 26 or 74. As is shown in Figure 4, the control field of this control block is set at TEST and the NBT field is set to 8 to indicate that the bit at position 8 have to be tested, as shown in Figure 3 and the NCA field is set to 20. If the tested bit is found equal to 0, the control block at address NCA = 20 is read and if it is found equal to 1, the NCA field at address NCA + 1 = 21 is read.

The contents of the control block at address 20 indicates that the next bit to test NBT is the bit 9. If bit 9 is found equal to 0 the control block at address NCA = 25 is read and if it is found equal to 1, the control block at address NCA + 1 = 26 is read.

Control blocks at addresses 25 and 26 contain END command fields.

The NCA field of control block 25 points to control block 30 and the NCA field of control block 26 points to control block 40.

Control blocks 30 and 40 contain COMP command fields. Consequently, the last operation of the searching mechanism is a compare operation with the patterns 01110000 or 01110110, depending upon which control block 30 or 40 is read. If a match is found between the control block pattern and the to-be searched pattern, the next control block address found in control block 31 or 41 is read. Thus the leaf is reached.

Control block at address 21 contains an END command field. This control block is read by the searching mechanism if bit 8 is found equal to 1. This control block points to the control block at address NCA = 50 which contains a COMP command field and the pattern 01111111 which has to be compared with the to-be searched pattern. If a match, is found between the control block pattern and the to-be searched pattern, the next control block address found in control block 51 is read. Thus the leaf is reached.

If a mismatch is found at the end of the search, between the control block pattern and the to-be searched pattern, the action taken by the searching mechanism depends upon whether the to-be searched pattern is searched by the source address processing logic, the destination address processing logic or updating mechanism.

If the source address is found, the SA processing logic updates the AGE value of the leaf control blocks with the current time value. To do this, the age value is written through the bus 80 and updating register 82.

If a source address is not found, the search table must be updated. This is done by the updating mechanism, as will be explained later on. Also, the search table is built by the updating mechanism, as far as new source addresses are received by the frame and routing processing logic 12.

Figure 4 represents on the right part the contents of the control blocks for performing a search in the second binary tree shown in figure 3.

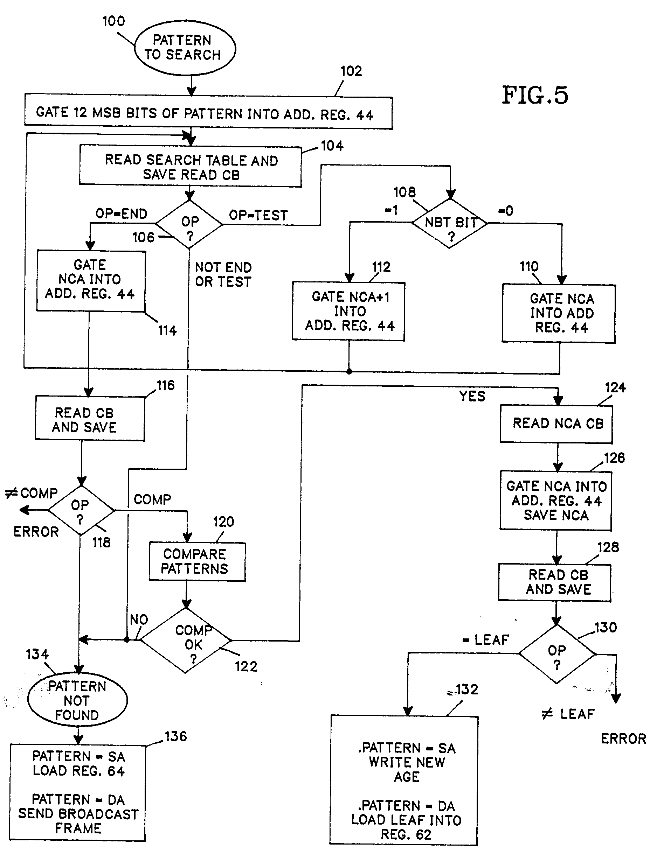

The Figure 5 represents a flow chart of the operations which have to be performed by the searching mechanism assuming n = 48 and p = 8000, so that 48-bit address patterns are searched. In a preferred embodiment of the invention the k = 12 bits on the left of a to-be searched pattern are used to address the search table to find the first control block and initiate the search. From this flow chart, the man skilled in the art will be able to design the SA/DA processing logics 24 and 26 either in hardware or software, however in order to speed up the searching process, an hardware implementation is recommended.

The first operation 100 of the SA or DA searching logic 24 or 26 consists in storing the pattern to search. Then, the 12 bits on the left which can be assumed equal to the 12 Most Significant Bits MSB of the to-be searched pattern are gated into address register 44, operation 102.

By operation 104, the control block at the address stored into address register by operation 102 is read and saved.

By operation 106, the command field OP is decoded and tested. If it is found equal to TEST, the bit at the position defined by the saved NBT value is tested, operation 108.

If it is found equal to 0, the NCA value of the control block saved at operation 104 is gated into the address register 44, operation 110 and the process is resumed at operation 104.

If the bit at the NBT position is found equal to 1, the NCA value is incremented by 1 and the NCA + 1 value is gated into, address register 44, operation 112. The process is then resumed at operation 104.

If it is found at operation 106 that the OP bit is equal to END, the NCA value from the control block saved at operation 104, is gated into the address register 44, operation 114.

The control block at this address is read and saved, operation 116. Then, the command field is tested by operation 118.

If this command field is not a COMP command field, an error signal is generated.

If the command field is found equal to COMP, the pattern of the control block saved at operation 116 is compared with the bits 13 to 17 of the searched pattern, operation 120.

If it is found at operation 122 that the compared pattern are equal, the contents of address register 44 is incremented by 1 to read and save the next control block, operation 124. The NCA field of the saved control block is gated into address register, operation 126 and the control block at this address is read and saved, operation 128, also the NCA address is saved.

The OP field of the saved control block is tested, operation 130.

Then, at operation 132, if the OP field is found equal to LEAF, the data out contents of the leaf control block is loaded into register 62 if the the to-be searched pattern is a destination address, or if the to-be searched pattern is a source address, the AGE field of the LEAF at the NCA + 1 address, where NCA is the value saved at operation 128, is updated.

If it is found at operation 130, that the OP field is not LEAF, an error signal is generated.

A mismatch found at operation 122, or a command field found at operation 106 different from a test field or end field, indicate that the pattern is not found as shown by 134.

Then, if the searched pattern is a source address, register 64 is loaded with the SA leaf value as described before in reference to Figure 2.

If the to-be searched pattern is a destination address, the DA leaf register 62 is loaded with a broadcast command, which means that the frame must be broadcasted to all bridge ports except the originating port, so that the station having the destination address, if any be able to send a response frame including its address as source address, so that the insert process of this address can be performed.

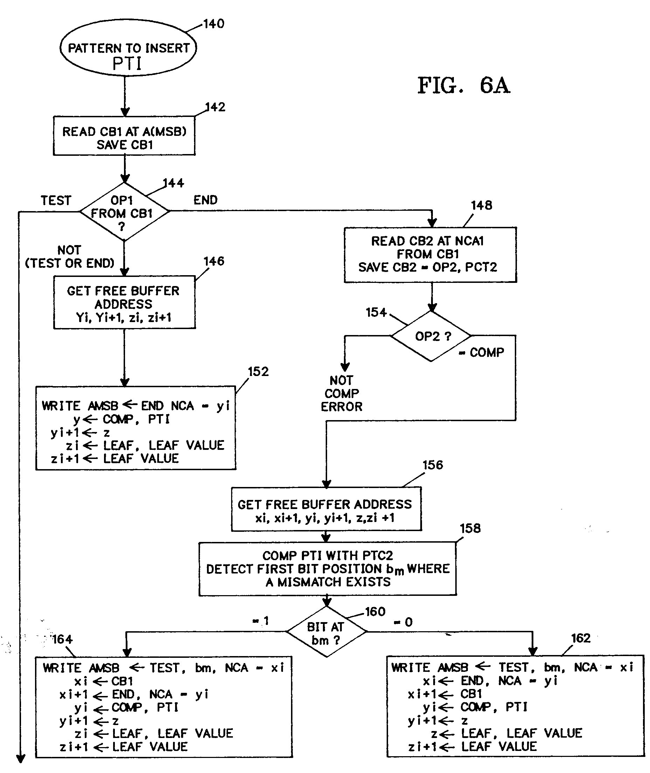

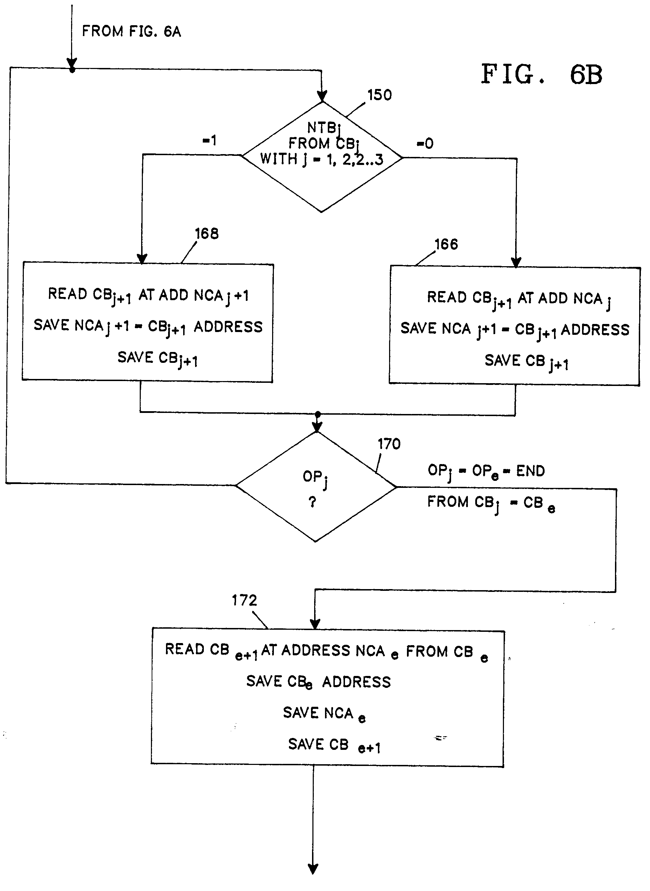

In the preferred embodiment of the present invention, the control blocks following the first control blocks at addresses 0 to 4095 in decimal representation, are stored in buffer registers which are chained together and can be leased from a free buffer queue by the updating mechanism when new patterns are inserted and can be released to the free buffer queue when patterns are deleted. Such an implementation is well known to the man skilled in the art and will not be described in more details. It will now be described with reference to Figures 6-A to 6-E, the method implemented in the updating mechanism to insert the control blocks into the search table so that a new pattern can be found by the SA/DA processing logic. This method can be implemented by logic circuitry or by a microprocessor.

The process is started when a pattern PTI needs to be inserted as determined by the circuits 64, 66 and 70 in Figure 2, as shown by 140 in Figure 6-A.

A first control block CB1 at the address A(MSB) corresponding to the 12 left bits of the pattern to insert PTI is read and saved (step 142).

The OP1 command field of control block CB1 is tested at step 144.

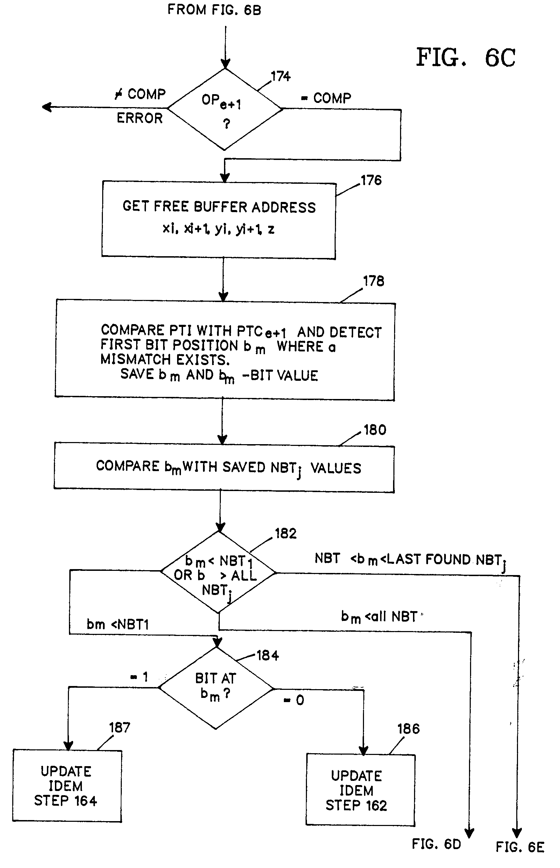

If it is not found equal to TEST or END, step 146 is entered. If it is found equal to END, step 148 is entered. if it is found equal to TEST, step 150 at the top of Figure 6-B is entered.

At step 146, the updating mechanism get four buffer addresses from the free buffer queue, such as addresses yi, yi + 1, zi and zi + 1. Then, if the start of frame line is not active, the search table is updated at step 152, by writing the search table as follows:

| at address A(MSB) | END, NCA = yi |
|---|---|
| at address yi | COMP, bits 12 to 47 of PTI |
| at address yi + 1 | NCA = zi |
| at address zi | LEAF, LEAF VALUE |
| at address zi + 1 | AGE, PTI |

At step 148, the next control block CB2 at address NCA1 saved from CB1 at step 142 is read and saved. The control field OP2 of this control block is tested at step 154, if it is found different from COMP, an ERROR signal is generated. If is found equal to COMP, the updating mechanism get six buffer addresses from the free buffer queue, such as addresses xi, xi + 1 yi + 1, zi and zi + 1 at step 156. Then at step 158, the bits 12 to 47 of the pattern to insert PTI are compared with the pattern PTC2 saved from CB2 at step 148, to detect the first bit position, bm, from the left, where a mismatch exists. At step 160, the value of the bit at the bm position in the pattern to insert is detected. Then at steps 162 and 164, the updated control blocks are written, if the start of frame signal is inactive.

Step 162 is entered if bit at position bm is found equal to 0, the search table is updated at step 162, by writing the search table as follows:

| at address A(MSB) | Test bm, NCA = xi |
|---|---|
| at address xi | END, NCA = yi |
| at address xi + 1 | CB1 |
| at address yi | COMP, bits 12 to 47 of PTI |
| at address yi + 1 | NCA = zi |
| at address zi | LEAF, LEAF VALUE |
| at address zi + 1 | AGE, PTI |

Step 164 is entered if bit at bm position is found equal to 1, the search table is updated at step 164, by writing the search table as follows:

| at address A(MSB) | Test bm, NCA = xi |
|---|---|
| at address xi | CB1 |
| at address xi + 1 | END, NCA = yi |
| at address yi | COMP, bits 12 to 47 of PTI |
| at address yi + 1 | NCA = zi |
| at address zi | LEAF, LEAF VALUE |
| at address zi + 1 | AGE, PTI |

If it is found at step 144 that the command field of the control block CB1 is equal to test, a loop is entered wherein successive control block CBj + 1 are read with j = 1, 2, 3 etc, until a control block CBe which has its OP field set at END is read. This is shown in Figure 6-B by steps 150, 166, 168 and 170. At step 150 the bit at the position NTBj, in the successive control blocks CBj are tested. If they are found equal to 0, step 166 is entered to read the next control block CBj + 1 at address NCAj. The CBj + 1 address = NCAj is saved and the contents of the control block CBj + 1 is saved.

If they are found equal to 1, step 168 is entered to read the next control, block CBj + 1 at address (NCAj) + 1. The CBj + 1 address = (NCAj) + 1 is saved and the contents of the control block CBj + 1 is saved.

At step 170, the command fields OPj of the successive control block CBj are tested, if they are found equal to TEST, step 150 is entered.

When the control block CBe is read with a command field OPe equal to END, step 172 is entered.

At step 172, the next control block CBe + 1 at address NCAe is read. The address of control block CBe contained in previously read control block CBe-1 is saved. NCAe = CBe + 1 address is saved and the contents of the CBe + 1 control block is saved.

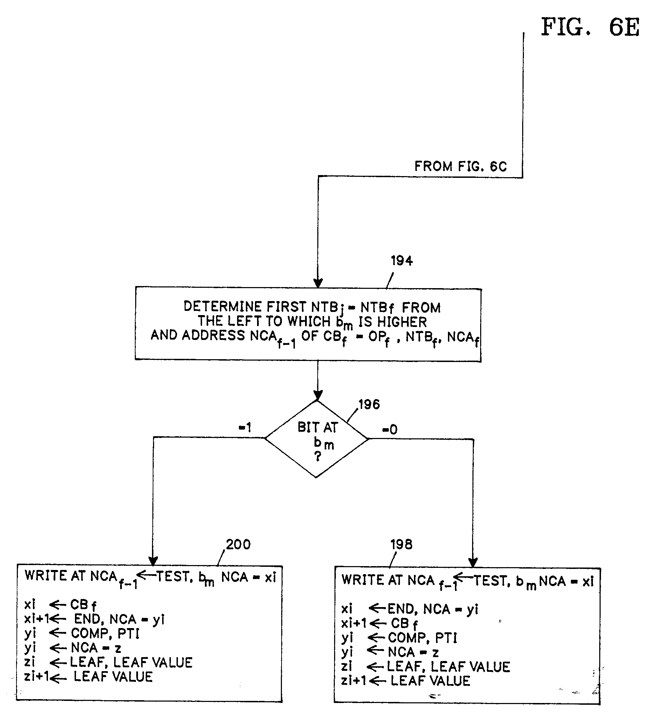

Then step 174 at the top of Figure 6-C is entered.

The command field OPe + 1 of control block CBe + 1 is tested at step 174. If it is found different from COMP an error signal is generated.

If is found equal to COMP, the updating mechanism get six buffer addresses from the free buffer queue, such as addresses xi, xi + 1, yi, yi + 1, zi and zi + 1 at step 176.

Then at step 178, the bits 12 to 47 of the pattern to insert PTI are compared with the pattern PTCe + 1 saved from CBe + 1 at step 172, to detect the first bit position, bm, from the left, where a mismatch exists. The bit position bm and the value of the bit at said position in the pattern to insert are saved.

At step 180, the bit position bm is compared with all the NTBj values saved at step 142, 166 and 168.

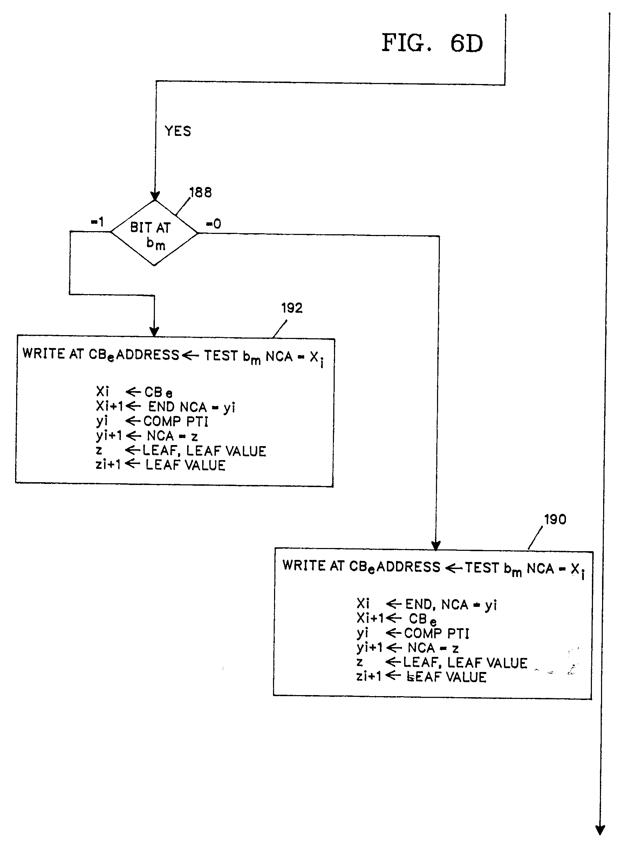

At step 182, if it is found that bm is lower than NBT1, step 184 is entered, if it is found that bm is higher that all NBTj values step 188 (Figure 6-D) is entered and if it is found comprised between NBT1 and the last found NBTj, step 194 (Figure 6-E) is entered.

At step 184, the bit value at bm position saved at step 178 is tested.

If it is found equal to 0, the control blocks are updated at step 186 in the same way as at step 162 (Figure 6-A). If it is found equal to 1, the control blocks are updated at step 187 in the same way as at step 164 (Figure 6-B).

At step 188, the bit value at bm position is tested. The control blocks are updated in accordance with the bit value.

Step 190 is entered if bit at bm position is found equal to 0, the search table is updated as follows:

| at CBe address | TEST bm, NCA = xi |
|---|---|
| at address xi | END, NCA = yi |
| at address xi + 1 | CBe |
| at address yi | COMP, bits 12 to 47 of PTI |
| at address yi + 1 | NCA = zi |
| at address zi | LEAF, LEAF VALUE |
| at address zi + 1 | AGE, PTI |

Step 192 is entered if bit at bm position is found equal to 1, the search table is updated as follows:

| at CBe address | TEST bm, NCA = xi |
|---|---|
| at address xi | CBe |
| at address xi + 1 | END, NCA = yi |
| at address yi | COMP, bits 12 to 47 of PTI |
| at address yi + 1 | NCA = zi |
| at address zi | LEAF, LEAF VALUE |
| at address zi + 1 | AGE, PTI |

At step 194, (Figure 6-E), the first NTBj = NTBf from the left, to which bm is higher is determined and the address NCAf-1 of control block CBf comprising NTBf is searched from the control blocks saved at steps 166 and 168.

At step 196, the bit value at the bm position is tested. The control blocks are updated in accordance with the bit value.

Step 198 is entered if bit at bm position is found equal to 0, the search table is updated as follows:

| at NCAf-1 address | TEST bm, NCA = xi |
|---|---|
| at address xi | END, NCA = yi |
| at address xi + 1 | CBf |
| at address yi | COMP, bits 12 to 47 of PTI |
| at address yi + 1 | NCA = zi |
| at address zi | LEAF, LEAF VALUE |
| at address zi + 1 | AGE, PTI |

Step 200 is entered if bit at bm position is found equal to 1, the search table is updated as follows:

| at NCAf-1 address | TEST bm, NCA = xi |
|---|---|
| at address xi | CBf |
| at address xi + 1 | END, NCA = yi |
| at address yi | COMP, bits 12 to 47 of PTI |
| at address yi + 1 | NCA = zi |
| at address zi | LEAF, LEAF VALUE |
| at address Z1 + 1 | AGE, PTI |

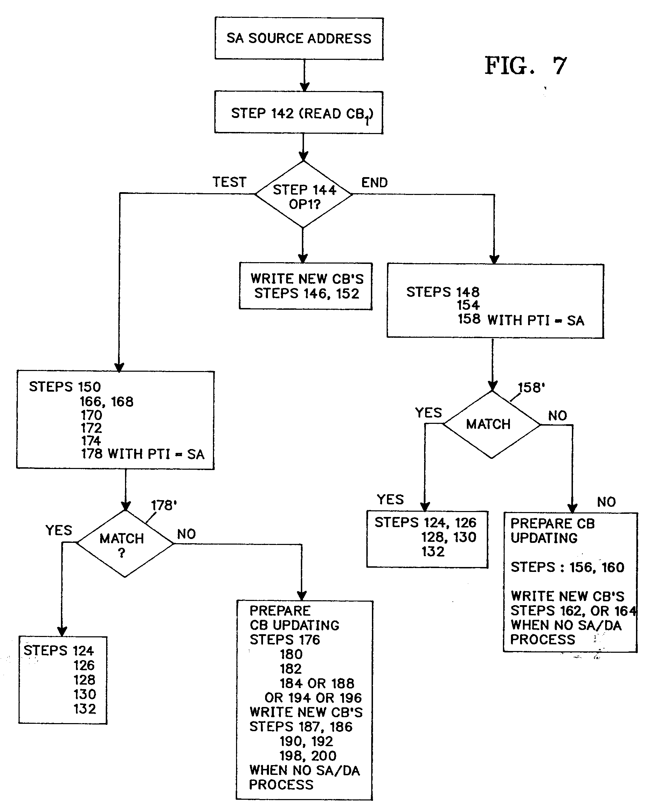

In another implementation of the present invention, two different SA and DA processing logic circuits 24 and 26 may be provided with the DA processing logic performing only the search function as described in reference to Figure 5 and the SA processing logic combining the search and insert functions of Figures 5 and 6 as shown in Figure 7.

In such an implementation, each time a source address SA is searched by SA processing logic circuits 24, the operations shown in Figure 7 are performed, these operations have the same reference as in Figures 5 and 6-A to 6-E.

The sequence of operations (or steps) shown in Figure 6-A to 6-E is performed until the comparison operation is reached, at 158 or 178, the comparison is performed between the pattern in the read control block and bits 12 to 47 of the searched source address, a match detected at step 158 or 178 as shown at 158' or 178' means that the SA address is found. Then, the steps 124, 126, 128, 130 and 132 detailed in Figure 5 are performed.

A mismatch detected at step 158 and 178 means that the SA address is not found and that the SA pattern must be inserted, thus the mismatch leads to the control block updating steps of Figure 6-A, 6-D or 6-E.

If the command field of the first control block read at step 142 is found different of TEST or END, the SA pattern must also be inserted and the steps 146 and 152 of Figure 6-A are performed.

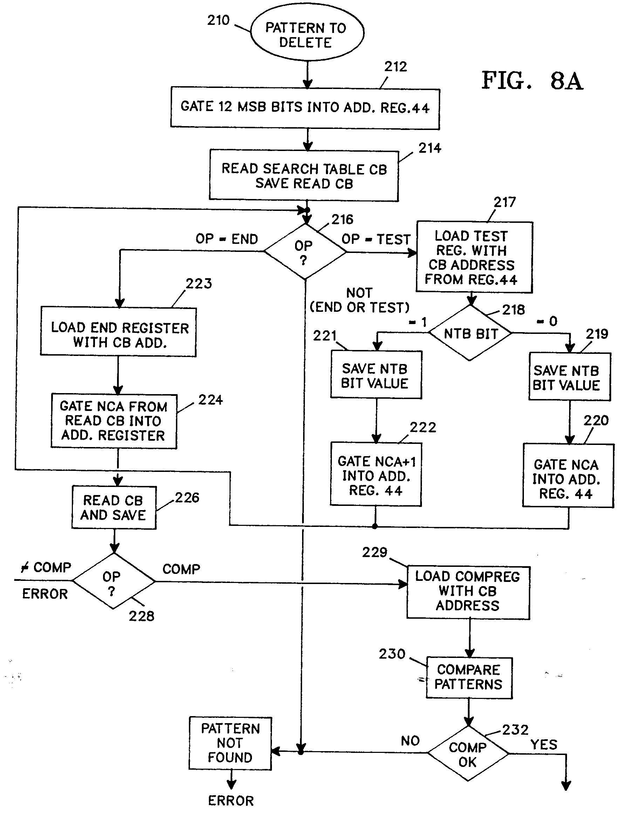

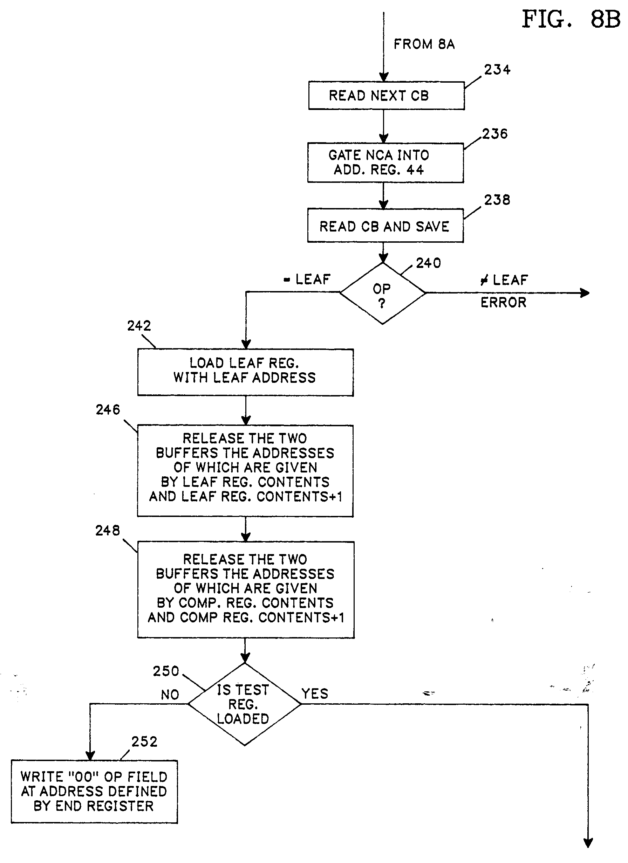

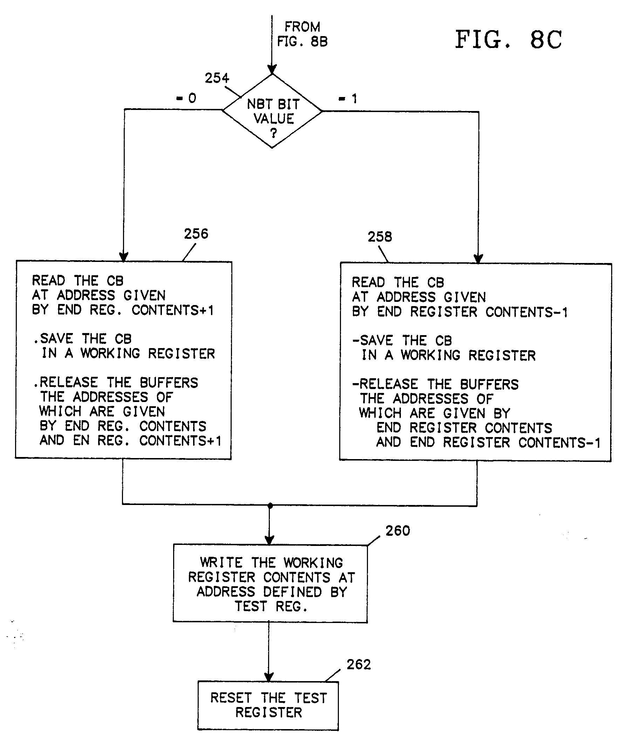

It will now be described in reference to Figures 8-A to 8-C, how the search table is updated to delete patterns, when their age values are found out of an acceptable range.

As previously explained, the patterns to delete are found by the updating mechanism, which initiates the delete process shown in Figures 8-A to 8-C when there is no SA/DA or INSERT process pending.

The process starts by selecting the pattern to delete PTD, as shown by 210, then the pattern is searched using the search method described in Figure 5.

The delete process needs four registers, namely :
- The last TEST control block address register, called TEST register in the Figures 8-A to 8-C, which is loaded with the address of the current control block when an OP = TEST command field is detected.
- The END control block address register, called END register which is loaded with the address of the current control block when and OP = END command field is detected.
- The COMP control block address register, called COMP register which is loaded with the address of the current control block when an OP = COMP command field is detected.
- The LEAF control block address register, called LEAF register which is loaded with the address of the current control block when an OP = LEAF command field is detected.

At the first step 212 of the delete process, the 12 MSB-bits of the pattern to delete are gated into the address register 44. Then, at step 214, control block at the address contained in the address register is read and saved.

The OP command field is tested at step 216.

If it is found equal to TEST, the contents of the address register is loaded into TEST register, at step 217.

Then at step 218, the NTB bit found in the saved control block is tested. If it is found equal to 0, the value 0 of the NTB bit is saved at step 219, and at step 220, the NCA field from the saved control block is gated into address register 44.

If the NTB bit is found equal to 1, the value 1 of the NTB bit is saved at step 221, and at step 222, the NCA field + 1 is calculated from the saved control block and is gated into address register 44.

The process is resumed at step, 214 until a control block with and OP = END command field is read. When this happens, the END register is loaded with the address register contents, at step 223.

At step 224, the NCA field from the read control block is gated into address register 44 and the so-addressed control block is read and saved at step 226.

The OP command field of the control block is tested at step 228. If it is different from COMP, an ERROR signal is generated. If it is equal to COMP, the COMP register is loaded with the address register contents at step 229. Then, at step 230, the pattern to delete PTD is compared with the pattern read from the control block. A mismatch detected at step 232 or an OP code different from END or TEST found at step 216 means that the pattern is not found which results in the generation of an ERROR signal.

If a match is found at step 232, the succeeding control block is read at step 234. This control block contains the next control block address NCA which is gated at step 236 into the address register 44. The addressed control block is read and saved at step 238.

The OP command field of this control block is tested at step 240. If it is found different from LEAF, an error signal is generated. If it is found equal to LEAF, the LEAF register is loaded with the address register contents, at step 242. Then, at step 246, the two buffers containing the LEAF control blocks are released, the buffer addresses are given by the LEAF register contents and LEAF register contents + 1.

At step 248, the two buffers containing the COMP control blocks are released, the buffer addresses are given by the COMP register contents and COMP register contents + 1.

At step 250, a test is made to determine if the TEST register is loaded. If no, the command field of the control block at the address found in the END register is set to 00, at step 252.

If yes, the NTB bit value saved at step 219 or 221, is tested at step 254.

If this value is found equal to 0, the control block at the address given by the END register contents + 1 is read and saved in a working register, the buffers at the addresses given by the END register contents and END register contents + 1 are released, as shown by step 256.

If this value is found equal to 1, the control block at the address given by the END register contents-1 is read and saved in the working register, the buffers at the addresses given by the END register contents and END register contents + 1 are released, as shown by step step 258.

When step 256 or step 258 is completed, the working register contents is written at the address defined by the TEST register, at step 260.

At the end of the process, the TEST register is reset.

It will now be described how the method and apparatus previously described can be used for performing the search function in a TCP/IP router.

TCP/IP is a well-known interworking architecture which allows heterogeneous systems to be interconnected. This is an architecture comprising four layers as follows:
- Physical Network Interface
- IP layer (Internet layer)
- TCP layer
- Applications layer.

Two kinds of node are defined in this environment. The Host node which runs the application and therefore implements the four layer functions of the TCP/IP layer stack and the routers which are in charge of routing messages across multiple physical networks and therefore implement only the functions of the Physical Network Interface and IP layers.

The router makes their routing decisions based upon the IP addressing scheme.

The IP addresses comprise four bytes i.e 32 bits and are divided into three fields of variable length, namely the network number field, the sub-network number field and the host number field.

The network number field is a 8, 16 or 24 bit long field depending upon the network class. The sub-network number is also variable.

Each router contains a routing table which associates an IP address to a specific Network interface, when a message is received on one interface, the IP router looks at the message destination address, performs a search in the routing table, finds out the output interface and sends the message thru that interface.

From a logical point of view, the routing table can contain:
- Networks numbers (8, 18, or 24 bits)
- sub-network numbers (variable length)
- Host addresses made of the three fields (32 bits)

Consequently, when the destination IP address of an incoming message is submitted to the search in the routing table, multiple matches can occur.

For example, assuming the following entries are in the table:

|  | Byte 0 | Byte 1 | Byte 2 | Byte 3 |  |
|---|---|---|---|---|---|
| Pattern 0 | 64 | - 0 | - 0 | - 0 | Network route |
| Pattern 1 | 64 | - 3 | - 0 | - 0 | sub-network route |
| Pattern 2 | 64 | - 3 | - 2 | - 56 | Host route |

(The byte values such as 64, 3, 2, 56 are expressed in decimal representation).

A message with an IP destination address of 64.3.5.9 will match the 64-0-0-0 and 64-3-0-0 entries but not the last entry 64-3-2-56. The selected entry must be the one which provides the BEST match, i.e. 64-3-0-0.

To solve this problem, the routing table which is equivalent to the search table described in reference to Figure 4, comprises control blocks which lead to intermediate leafs, after comparison of a to-be searched pattern with selected patterns 1 and 2.

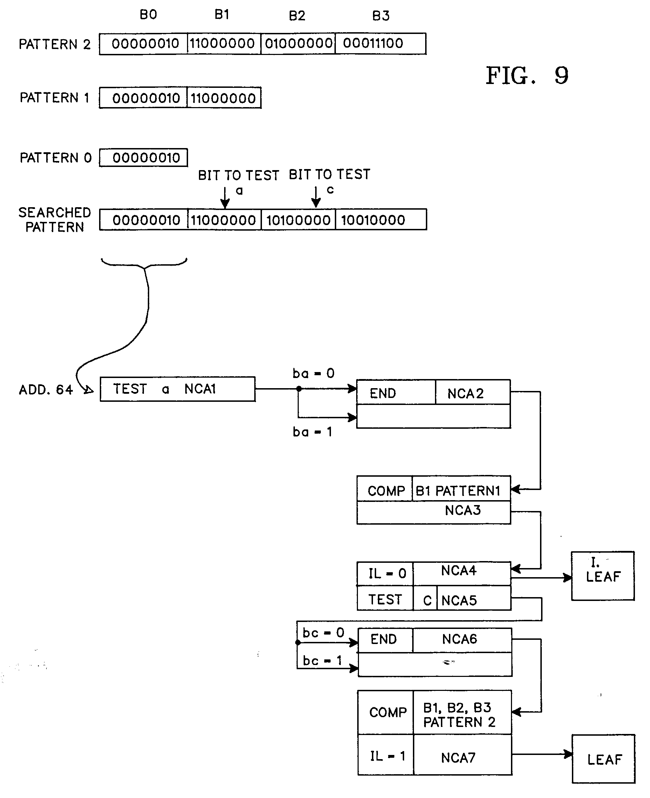

Figure 9 shows these three patterns, a to-be searched pattern 64-3-5-9 and the corresponding control blocks assuming that bits ba and bc have to be tested in positions "a" and "c".

The byte 0 contents, i.e. "64" in the illustrative example is used to read the control block at the corresponding address "64" of the search table. An empty control block at this address would have meant that no match can be found.

If, as shown in Figure 9 the control block is a TEST control block, the NBT bit at position "a" is tested, and, if the bit ba in position "a" is found equal to 0, the next control block, at address NCA1 is read.

The control block at address NCA1 is an END control block with an address NCA2 which points to a COMP control block and the pattern value is byte B1 of pattern 1, the next control block at address NCA2 + 1 comprises a next control block address NCA3 control block at address NCA3 comprises the address NCA4 of the control block containing the intermediate LEAF with an intermediate leaf indicator JL set to 0. The intermediate leaf contents is loaded into a working register. The first intermediate leaf contents comprises a LEAF value if a mismatch is detected in order to indicate that the best match is for the 64-0-0-0 network route, and a LEAF value if a match is detected in order to indicate that the match is far a sub-network route. In that later case the control block at address NCA3 + 1 is a TEST control block for the bit at position "c" with an address NCA5 chich points to the next control block in order to go on with the search.

The control block at address NCA5 which is read if bc is found equal to 0 is an END control block in the illustrated example, which points to a COMP control block at address NCA6, and the pattern value is byte B1, B2 and B3 of pattern 2. The next control block at address NCA6 + 1 is read if a match is found with the searched pattern, this control block contains the address NCA7 of the final LEAF with the indicator IL set to 1 to indicate that the leaf is a final leaf.

The control block at address NCA7 comprises the final LEAF value, which supersedes the intermediate leaf value if a match is found, otherwise the intermediate leaf value is used at the end of the search.

The specific arrangement of the control blocks is only given to illustrate the concept of the invention when applied to the TCP/IP architecture, and can be changed according to the size of the control blocks.

The present invention has been described assuming that simple tests are performed on bits determined by the NBT field in the TEST control blocks. However to speed up the search, TESTS on two or more bits can be performed.

Assuming that tests on two bits are used, the TEST control block contents will be:
TEST, NTB = x,
NCA means that bits at positions x and x + 1 are tested and the address NCA is the address of the first control block in a group of four adjacent control blocks at address NCA, NCA + 1, NCA + 2, NCA + 3 which contains the control block to be read depending upon the values of the two tested bits, i.e 00, 01, 10, 11.

A test on three bits would need eight adjacent control blocks at address NCA to NCA + 7 to be read depending upon the value of the three tested bits, i.e. 000 to 111.

Performing a test on more than one bit reduces the search time but needs more control blocks in the search table.

**Claims**

1. A method for searching a n-bit pattern among a plurality of p n-bit patterns, where n and p are integer numbers and p is lower than $2^n$ and the p patterns are any patterns among the $2^n$ possible patterns of n bits, said method comprising using a search table stored in a storing means and comprising control blocks which are chained together and the contents of which is indicative of operations to be performed on the to-be-searched pattern, said method being characterized in that it includes the steps of:

a) providing control blocks of a first type indicative of test operations on at least one selected bit of the to-be-searched pattern and of a second type indicative of compare operations with a specified value and of a third type indicative that no operations have to be performed,

b) chaining control blocks in at least one chain in such a way that each control block chain determines operations which lead to the finding of one out of the p patterns, depending upon the values of the p patterns,

c) reading a first control block at a search table address which is derived from a selected field of k bits of the to-be- searched pattern, with k being an integer number lower than n,

d) returning a not-found pattern signal if the read control block is of the third type or executing the operations indicated in the control block and the control blocks chained thereto, until a control block of the second type is reached,

e) upon reaching a control block of the second type, comparing the to-be-searched pattern with the specified value in said control block,

f) returning a "found pattern" information if a match is detected at step e) or a " not found pattern" information if a mismatch is detected at step e) indicative of the fact that the to-be-searched pattern is one pattern among the p patterns or not, respectively.

2. The method according to claim 1 characterized in that it comprises the following step:

g) reading a final control block chained to the control block of the second type and comprising information related to the found pattern when a match is detected at step e).

3. The method according to claim 1 or 2, characterized in that the step of providing control blocks includes:

- writing in the control blocks located in the search table at addresses derived from the values of the selected field of k-bits of the p patterns, information indicative of at least one operation which starts the search in binary trees comprised of the (n-k) remaining bits of the patterns among the p patterns having the same combinations of k bits in the selected k-bit field,
- chaining to each control block at an address derived from the the selected field of k bits, a number of chains of control blocks equal to the number of leafs of the corresponding binary tree and writing in the control blocks of each of said chains information indicative of the operations which lead to a leaf, said operations comprising test operations of the first type on bits at positions where jumps exist in the binary tree, if any, and at least one compare operation of the second type wherein the specified value is the value of the (n-k) bits of one of the p patterns of the said binary tree,
- providing an operation of the third type in the control blocks at addresses derived from combinations of the k bits of the selected field which do not exist in the p patterns.

4. A searching apparatus for searching a n-bit pattern among a plurality of p n-bit patterns, where n and p are integer numbers and p is lower than $2^n$ and the p patterns are any patterns among the $2^n$ possible patterns, comprising a search table stored in a storing means (52), said search table comprising control blocks (CB) which are chained together and the contents of which is indicative of operations to be performed on the to-be-searched pattern, said apparatus being characterized in that it includes:

- writing means (74,82, Fig.6) for writing the control blocks in the search table, said control blocks being of a first type indicative of test operations on at least one selected bit of the to- be- searched pattern and of 0 second type indicative of compare operations with a specified value and of a third type indicative that no operations have to be performed, and chaining control blocks in at least one chain in such a way that each control block chain determine operations which lead to the finding of one of the p patterns, depending upon the values of the p patterns,
- means (44,54,56,102) for reading a first control block at a search table address which is derived from a selected field of k of the to-be-searched pattern, with k being an integer number lower than n,
- means (106,134,136) for generating a not-found pattern signal if the read control block is of the third type,
- means (114,108,118) for executing the operations indicated in the first read control block and the control blocks chained thereto, until a control block of the second type is is reached,
- comparing means (120) for comparing the to be searched pattern with the specified value in the control block of the second type,

- means (134,136) for generating a "not found pattern" information if a mismatch is detected by the comparing means,
- means (130,132) for generating a "found pattern" information if a match is detected by the comparing means, whereby the "found pattern" information indicates that the to-be-searched pattern is one pattern among the p patterns.

5. The apparatus according to claim 4 characterized in that it comprises:

means (124, 126) responsive to the detection of a match by the comparing means for reading a final control block (LEAF) chained to the control block of the second type and comprising information related to the found pattern.

6. The apparatus according to claim 4 or 5, characterized in that the control blocks writing means comprises:
- means (152, 164, 162) for writing in the control blocks located in the search table at addresses derived from the values of the selected field of k-bits of the p patterns, information indicative of the operations which start the search in binary trees comprised of the (n-k) remaining bits of the patterns among the p patterns having the same combinations of k bits in the selected k-bit field,
- means (176,192,194) for chaining to each control block at an address derived from the the selected field of k-bits, a number of chains of control blocks equal to the number of leafs of the corresponding binary tree and writing in the control blocks of each said chain the operations which lead to a leaf, said operations comprising test operations of the first type on bits at positions where jumps exist in the binary tree, if any, and at least one compare operation of the second type wherein the specified value is the value of the (n-k) bits of one of the p patterns of the said binary tree.

7. A connecting device (10) between communication networks linking stations, wherein each station has an address of n bits, so that the set of addresses of the active stations pertaining to the communication networks connectable by the connecting device through input and output ports comprise p patterns of n bits, said bridge being responsive to the frames received on an input port from a source station comprising a source station address field and a destination address field for determining the output port to which the frame has to be routed, said connecting device being characterized in that it comprises:
- a first searching apparatus according to any one of claims 4, 5 or 6, which is responsive to the destination address for searching the destination address pattern, and if the destination address pattern is found, reading the final control block wherein the related pattern information is a frame routing information,
- a second searching apparatus according to any one of claims 4, 5, or 6 which is responsive to the source address for searching the source address pattern and if the source address pattern is not found, updating the control blocks in the search table and writing new control blocks so that the control blocks needed to find said address pattern be inserted in the search table.

8. The connecting device according to claim 7 characterized in that it comprises a sequencing means which alternatively activates the first and the second searching apparatuses whereby the operations performed on the source address and destination address patterns are interleaved.

9. The connecting device according to claim 7 or 8 characterized in that it comprises an updating means (74) which is responsive to the "pattern not found" information generated by the second searching apparatus for initiating a search of the not found pattern comprising the steps of:

reading the first control block at the address derived from the the k-bit field of the not found pattern,

if said first control block is empty, writing at said address the first control block of the chain which leads to the compare control block wherein the specified value is equal to the (n-k) bits of the not found pattern,

if not, reading the control blocks chained to the first control block until a compare control block is read,

comparing the (n-k) bits of the not found pattern with the specified value in said control block,

15

detecting the first mismatch bit position (bm) where a mismatch exists,

writing a new control block of the first type indicative of a test operation on the bit at the mismatch position, and chaining thereto a control block of the second type wherein the specified value comprises the (n-k) bits of the not found pattern and a final control block (LEAF) including at least routing information.

10. The connecting device according to claim 9 characterized in that the final control block of the chains comprises an age field which is written to the current time value each time a pattern is found by the second searching apparatus, said age fields in the final control blocks of the control block chains being read at regular intervals by the updating mechanism which is responsive to age values to update the control blocks in such a way that the the address patterns which have not been searched for a time higher than a fixed limit be no more found by the first and second searching apparatuses.

11. The connecting device according to any one of claims 7 to 10 characterized in that the control block chains in the search table comprise control blocks of the second type wherein the specified value comprises selected fields of the p patterns, chained with at least one intermediate final control block (LI) in order to detect that the to- be- searched pattern partially match with one of the p patterns.

12. The connecting device according to claim 11, characterized in that it comprises means for storing each one of the p patterns found as a result of a compare operation with each one selected field in order to determine the pattern among the p patterns which best matchs with the to be searched pattern.

FIG. 2

UPDATING DATA 82

52

READ/WRITE
84

SEARCH TABLE

54

ADDRESS BUS

56

CONTROL BLOCK OUT

44

ADDRESS

34

SA/DA PROCESS CONTROL

36

38

57

80

78

UPDATE MECHANISM.

42 40

MULTIPLEX

46

MULTIPLEX

58 60

48 50

26

NO SA/DA PROCESS 33

24

DA PROCESSING LOGIC

SA PROCESSING LOGIC

START OF FRAME 35

S A L E A F

D E C O D E

GATE

74

70

72

62

DA LEAF

28

30

64 66

68

25

DA

SA

22

LAN N°

12

SA/DA PROCESS 32

FRAME PROCESSING AND ROUTING

FIG. 3

ADDRESS LIST

BIT POSITION

| 0 | 1 | 2 | 3 | 4 | 5 | 6 | 7 | 8 | 9 | 10 | 11 |
|---|---|---|---|---|---|---|---|---|---|----|----|
| 0 | 0 | 0 | 0 | 0 | 1 | 1 | 1 | 0 | 0 | 0 | 0 |
| 0 | 0 | 0 | 0 | 0 | 1 | 1 | 1 | 0 | 1 | 1 | 0 |
| 0 | 0 | 0 | 0 | 0 | 1 | 1 | 1 | 1 | 1 | 1 | 1 |
| 0 | 0 | 0 | 1 | 0 | 1 | 1 | 0 | 1 | 0 | 0 | 0 |
| 0 | 0 | 0 | 1 | 1 | 1 | 1 | 1 | 1 | 0 | 0 | 0 |
| 0 | 0 | 0 | 1 | 1 | 0 | 0 | 0 | 0 | 0 | 0 | 0 |

ETC...

BINARY TREES

BIT POSITION

4 5 6 7 8 9 10 11

ADDRESS 0   0 1 1 1 →0 →0 0 0
                        →1 1 0
                      →1 1 1 1

ADDRESS 1 →0 1 1 0 1 0 0 0
          →1 →1 1 1 1 0 0 0
          →0 →0 0 0 0 0 0
              →1 1 0 0 0 0

| OP | |
|----|----|

OP = TEST       11
     END        01
     COMPARE     10
     LEAF        00

| TEST | NBT | NCA |
|------|-----|-----|

NBT = NEXT BIT TO TEST
NCA = NEXT CONTROL BLOCK ADDRESS

| END | | NCA |
|-----|----|-----|

CB1

| COMP | PATTERN | |
|------|---------|----|

CB2

| | | NCA |
|--|--|-----|

CB3

| LEAF | OUTPUT DATA |
|------|-------------|

CB4

| AGE | ADDRESS |
|-----|---------|

19

SEARCH TABLE

FIG. 4

| | | | |
|---|---|---|---|
| ADD 0 | TEST | NBT=8 NCA=20 | |
| ADD 1 | TEST | NBT=4 NCA=70 | |

ADD 15

BIT 4 = 0

| | | |
|---|---|---|
| END | NCA = 73 | ADD 70 |
| TEST | NBT = 5    NCA = 79 | ADD 71 |

BIT 4 = 1

| | | |
|---|---|---|
| COMP | 0 1 1 0 1 0 0 0 | ADD 73 |
| | NCA = 76 | ADD 74 |

BIT 8 = 0

| | | |
|---|---|---|
| ADD 20 | TEST | NBT = 9      NCA = 25 |
| ADD 21 | END | NCA = 50 |

BIT 8 = 1

| | | |
|---|---|---|
| LEAF | | ADD 76 |
| | | ADD 77 |
| TEST | NBT = 6    NCA = 90 | ADD 78 |
| END | NCA = 84 | ADD 79 |

BIT 9 = 0

| | | |
|---|---|---|
| ADD 25 | END | NCA = 30 |
| ADD 26 | END | NCA = 40 |

BIT 9 = 1

| | | |
|---|---|---|
| COMP | 1 1 1 1 1 0 0 0 | ADD 84 |
| | NCA = 88 | ADD 85 |

| | | |
|---|---|---|
| ADD 30 | COMP | 0 1 1 1 0 0 0 0 |
| ADD 31 | | NCA = 36 |

BIT 6 = 0

| | | |
|---|---|---|
| LEAF | | ADD 88 |
| | | ADD 89 |
| END | NCA = 94 | ADD 90 |
| END | NCA = 98 | ADD 91 |

| | |
|---|---|
| ADD 36 | LEAF |
| ADD 37 | |

BIT 6 = 1

| | | |
|---|---|---|
| ADD 40 | COMP | 0 1 1 1 0 1 1 0 |
| ADD 41 | | NCA=45 |

| | | |
|---|---|---|
| COMP | 1 0 0 0 0 0 0 | ADD 94 |
| | NCA = 97 | ADD 95 |

| | |
|---|---|
| ADD 45 | LEAF |
| ADD 46 | |

| | | |
|---|---|---|
| LEAF | | ADD 97 |
| | | ADD 98 |
| COMP | 1 0 1 1 0 0 0 0 | ADD 99 |
| | NCA = 110 | ADD 100 |

| | | |
|---|---|---|
| ADD 50 | COMP | 0 1 1 1 1 1 1 1 |
| ADD 51 | | NCA=60 |

| | |
|---|---|
| LEAF | ADD 110 |
| | ADD 111 |

| | |
|---|---|
| ADD 60 | LEAF |
| ADD 61 | |

20

# FIG.5

100 PATTERN TO SEARCH

102 GATE 12 MSB BITS OF PATTERN INTO ADD. REG. 44

104 READ SEARCH TABLE AND SAVE READ CB

106 OP ?

OP=END → 114 GATE NCA INTO ADD. REG. 44

OP=TEST → 108 NBT BIT ?

NOT END OR TEST

108 NBT BIT ?
=1 → 112 GATE NCA+1 INTO ADD. REG. 44
=0 → 110 GATE NCA INTO ADD REG. 44

116 READ CB AND SAVE

118 OP ?
≠ COMP → ERROR
COMP → 120 COMPARE PATTERNS

122 COMP OK ?
NO →
YES → 124 READ NCA CB

124 READ NCA CB

126 GATE NCA INTO ADD. REG. 44 SAVE NCA

128 READ CB AND SAVE

130 OP ?
= LEAF → 132 .PATTERN = SA WRITE NEW AGE / .PATTERN = DA LOAD LEAF INTO REG. 62
≠ LEAF → ERROR

134 .PATTERN NOT FOUND

136 PATTERN = SA LOAD REG. 64 / PATTERN = DA SEND BROADCAST FRAME

FIG. 6A

PATTERN TO INSERT
PTI
— 140

READ CB1 AT A(MSB)
SAVE CB1
— 142

OP1
FROM CB1
?
— 144

TEST

END

READ CB2 AT NCA1
FROM CB1
SAVE CB2 = OP2, PCT2
— 148

NOT
(TEST OR END)

GET FREE BUFFER
ADDRESS
Yi, Yi+1, zi, zi+1
— 146

OP2 ?
— 154

= COMP

NOT
COMP
ERROR

WRITE AMSB ← END NCA = yi
y ← COMP, PTI
yi+1 ← z
zi ← LEAF, LEAF VALUE
zi+1 ← LEAF VALUE
— 152

GET FREE BUFFER ADDRESS
xi, xi+1, yi, yi+1, z,zi +1
— 156

COMP PTI WITH PTC2
DETECT FIRST BIT POSITION $b_m$ WHERE
A MISMATCH EXISTS
— 158

BIT AT
bm ?
— 160

= 1

= 0

WRITE AMSB ← TEST, bm, NCA = xi
xi ← CB1
xi+1 ← END, NCA = yi
yi ← COMP, PTI
yi+1 ← z
zi ← LEAF, LEAF VALUE
zi+1 ← LEAF VALUE
— 164

WRITE AMSB ← TEST, bm, NCA = xi
xi ← END, NCA = yi
xi+1 ← CB1
yi ← COMP, PTI
yi+1 ← z
z ← LEAF, LEAF VALUE
zi+1 ← LEAF VALUE
— 162

# FIG. 6B

FROM FIG. 6A

**150** NTBj FROM CBj WITH j = 1, 2,2..3

=1

=0

**168** READ $CB_{j+1}$ AT ADD $NCA_j + 1$
SAVE $NCA_j + 1$ = $CB_{j+1}$ ADDRESS
SAVE $CB_{j+1}$

**166** READ $CB_{j+1}$ AT ADD $NCA_j$
SAVE $NCA_j + 1$ = $CB_{j+1}$ ADDRESS
SAVE $CB_{j+1}$

**170** $OP_j$ ?

$OP_j$ = $OP_e$ = END
FROM $CB_j$ = $CB_e$

**172** READ $CB_{e+1}$ AT ADDRESS $NCA_e$ FROM $CB_e$
SAVE $CB_e$ ADDRESS
SAVE $NCA_e$
SAVE $CB_{e+1}$

FROM FIG. 6B

FIG. 6C

174

$OP_{e+1}$ ?

$\neq$ COMP
ERROR

= COMP

176

GET FREE BUFFER ADDRESS
$xi, xi+1, yi, yi+1, z$

178

COMPARE PTI WITH $PTC_{e+1}$ AND DETECT
FIRST BIT POSITION $b_m$ WHERE a
MISMATCH EXISTS.
SAVE $b_m$ AND $b_m$ –BIT VALUE

180

COMPARE $b_m$ WITH SAVED $NBT_j$ VALUES

182

$b_m < NBT_1$
OR $b > ALL$
$NBT_j$

$NBT < b_m < $ LAST FOUND $NBT_j$

$bm < NBT1$

$b_m < $ all NBT

184

BIT AT
$b_m$ ?

= 1

= 0

187

UPDATE
IDEM
STEP 164

186

UPDATE
IDEM
STEP 162

FIG. 6D

FIG. 6E

24

# FIG. 6D

YES

188

BIT AT $b_m$

=1     =0

192

WRITE AT $CB_e$ ADDRESS ← TEST $b_m$ NCA = $X_i$

$X_i$    ← $CB_e$
$X_{i+1}$ ← END NCA = $y_i$
$y_i$    ← COMP PTI
$y_{i+1}$ ← NCA = $z$
$z$     ← LEAF, LEAF VALUE
$z_{i+1}$ ← LEAF VALUE

190

WRITE AT $CB_e$ ADDRESS ← TEST $b_m$ NCA = $X_i$

$X_i$    ← END, NCA = $y_i$
$X_{i+1}$ ← $CB_e$
$y_i$    ← COMP PTI
$y_{i+1}$ ← NCA = $z$
$z$     ← LEAF, LEAF VALUE
$z_{i+1}$ ← LEAF VALUE

25

# FIG. 6E

FROM FIG. 6C

194

DETERMINE FIRST $NTB_j = NTB_f$ FROM
THE LEFT TO WHICH $b_m$ IS HIGHER
AND ADDRESS $NCA_{f-1}$ OF $CB_f = OP_f$ , $NTB_f$, $NCA_f$

196

BIT AT
$b_m$
?

=1

=0

200

WRITE AT $NCA_{f-1}$ ←TEST, $b_m$ NCA = $x_i$

$x_i$ ← $CB_f$
$x_i+1$ ← END, NCA = $y_i$
$y_i$ ← COMP, PTI
$y_i$ ← NCA = $z$
$z_i$ ← LEAF, LEAF VALUE
$z_i+1$ ← LEAF VALUE

198

WRITE AT $NCA_{f-1}$ ←TEST, $b_m$ NCA = $x_i$

$x_i$ ← END, NCA = $y_i$
$x_i+1$ ← $CB_f$
$y_i$ ← COMP, PTI
$y_i$ ← NCA = $z$
$z_i$ ← LEAF, LEAF VALUE
$z_i+1$ ← LEAF VALUE

**FIG. 7**

Flowchart FIG. 7:

- SA SOURCE ADDRESS
  - → STEP 142 (READ $CB_1$)
    - → STEP 144 OP1?
      - TEST →
      - END →
      - (down) → WRITE NEW CB'S STEPS 146, 152

TEST branch:
- STEPS 150 / 166, 168 / 170 / 172 / 174 / 178 WITH PTI = SA
  - → 178' MATCH ?
    - YES → STEPS 124 / 126 / 128 / 130 / 132
    - NO → PREPARE CB UPDATING STEPS 176 / 180 / 182 / 184 OR 188 / OR 194 OR 196 / WRITE NEW CB'S STEPS 187, 186 / 190, 192 / 198, 200 / WHEN NO SA/DA PROCESS

END branch:
- STEPS 148 / 154 / 158 WITH PTI = SA
  - → 158' MATCH
    - YES → STEPS 124, 126 / 128, 130 / 132
    - NO → PREPARE CB UPDATING STEPS : 156, 160 / WRITE NEW CB'S STEPS 162, OR 164 / WHEN NO SA/DA PROCESS

FIG. 8A

210 — PATTERN TO DELETE

212 — GATE 12 MSB BITS INTO ADD. REG. 4 4

214 — READ SEARCH TABLE CB SAVE READ CB

216 — OP ?

OP = END

OP = TEST

NOT (END OR TEST)

217 — LOAD TEST REG. WITH CB ADDRESS FROM REG. 44

218 — NTB BIT

= 1

= 0

223 — LOAD END REGISTER WITH CB ADD.

221 — SAVE NTB BIT VALUE

219 — SAVE NTB BIT VALUE

224 — GATE NCA FROM READ CB INTO ADD. REGISTER

222 — GATE NCA+1 INTO ADD. REG. 4 4

220 — GATE NCA INTO ADD. REG. 4 4

226 — READ CB AND SAVE

228 — OP ?

≠ COMP → ERROR

COMP

229 — LOAD COMPREG WITH CB ADDRESS

230 — COMPARE PATTERNS

232 — COMP OK

NO

YES

PATTERN NOT FOUND

ERROR

FIG. 8B

FROM 8A

READ NEXT CB — 234

GATE NCA INTO
ADD. REG. 44 — 236

READ CB AND SAVE — 238

240
OP
?
= LEAF
≠ LEAF
ERROR

242
LOAD LEAF REG.
WITH LEAF ADDRESS

246
RELEASE THE TWO
BUFFERS THE ADDRESSES
OF WHICH ARE GIVEN
BY LEAF REG. CONTENTS
AND LEAF REG. CONTENTS+1

248
RELEASE THE TWO
BUFFERS THE ADDRESSES
OF WHICH ARE GIVEN
BY COMP. REG. CONTENTS
AND COMP REG. CONTENTS+1

250
IS TEST
REG.
LOADED
NO
YES

252
WRITE "00" OP FIELD
AT ADDRESS DEFINED
BY END REGISTER

FROM
FIG. 8B

FIG. 8C

254

NBT BIT
VALUE
?

= 0

= 1

256

READ THE CB
AT ADDRESS GIVEN
BY END REG. CONTENTS+1

.SAVE THE CB
IN A WORKING REGISTER

.RELEASE THE BUFFERS
THE ADDRESSES OF
WHICH ARE GIVEN
BY END REG. CONTENTS
AND EN REG. CONTENTS+1

258

READ THE CB
AT ADDRESS GIVEN
BY END REGISTER CONTENTS-1

-SAVE THE CB
IN A WORKING REGISTER

-RELEASE THE BUFFERS
THE ADDRESSES OF
WHICH ARE GIVEN BY
END REGISTER CONTENTS
AND END REGISTER CONTENTS-1

260

WRITE THE WORKING
REGISTER CONTENTS AT
ADDRESS DEFINED BY
TEST REG.

262

RESET THE TEST
REGISTER

FIG. 9

European Patent Office

**EUROPEAN SEARCH REPORT**

Application Number

EP    91 48 0095

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,A | US-A-3 916 387 (I.B.M. CORPORATION) 28 October 1975 <br> * the whole document * <br> --- | 1,4,7 | G06F15/40 <br> G06F15/16 |
| A | IEEE PROCEEDINGS INFOCOM 85 <br> 28 March 1985, HYATT REGENCY, WASHINGTON D.C. <br> pages 178 - 184; <br> R. NISHIMURA ET AL.: 'Bridge design in the Tornet Local Area Network' <br> * page 179, column 2, line 25 - page 182, column 1, line 15 * | 1,4,7 | |

TECHNICAL FIELDS
SEARCHED (Int. Cl.5 )

G06F

The present search report has been drawn up for all claims

| Place of search | Date of completion of the search | Examiner |
|---|---|---|
| THE HAGUE | 07 FEBRUARY 1992 | KATERBAU R.E. |

EPO FORM 1503 03.82 (P0401)